# EUROPÄISCHE PATENTSCHRIFT

(11) **EP 1 870 255 B1**
(45) Veröffentlichungstag und Bekanntmachung des Hinweises auf die Patenterteilung: **07.09.2011**
(21) Anmeldenummer: 07009484.2
(22) Anmeldetag: 11.05.2007
(51) Int. Cl.: B60B 21/00, B60B 21/06

(54) **Felgenmodell**
Wheel rim model
Modèle de jante

(30) Priorität: 24.06.2006 DE 102006029175
(43) Veröffentlichungstag der Anmeldung: 26.12.2007
(73) Patentinhaber: Dr. Ing. h.c. F. Porsche AG, 70435 Stuttgart (DE)
(72) Erfinder: Reichert, Andreas, 71229 Leonberg (DE)

(56) Entgegenhaltungen:
- DE-A1- 19 535 096
- DE-A1- 19 548 902
- DE-U1- 9 420 085
- US-A- 1 804 937
- US-A- 4 065 186

## Beschreibung

Die vorliegende Erfindung betrifft ein Felgenmodell, insbesondere für Versuchszwecke.

Aus der DE 94 20 085.8 U1 ist ein Speichenrad für Motorräder zur schlauchlosen Verwendung bekannt. Hierbei besteht eine Felgenschüssel symmetrisch aus zwei gleich breiten Felgenschüsselhälften mit einer oder mehreren Rippen oder asymmetrisch aus zwei unterschiedlich breiten Felgenschüsselhälften mit ebenfalls einer oder mehreren Rippen. Durch die Verwendung von unterschiedlichen Lagerflanschen und stets baugleicher Radnabe wird dabei ein Baukastensystem ermöglicht, mit welchem sich unterschiedliche Felgenbreiten und Durchmesser realisieren lassen.

Aus der DE 195 48 902 A1 ist eine Felge und deren Herstellungsverfahren aus Felgenhälften nach einem Baukastensystem bekannt. Dabei wird eine Felgenschüssel aus zwei Hälften zusammengebaut, welche vor ihrer Befestigung an einem Radstern oder Nabenteil zu einer Einheit zusammengefügt werden. Die beiden Felgenhälften können beispielsweise mittels Kleben, Nieten, Schrauben oder Schweißen miteinander verbunden werden.

Aus der US 4,065,186 A ist eine Felge bekannt, die ein Felgenbett und alternierende Innen- und Außenspeichen umfasst, wobei die Speichen durch an das Felgenbett angeschweißte Flansche über Gewindebolzen und -mütter mit dem Felgenbett verbunden sind.

Schließlich ist aus der DE 195 35 096 A1 ein dreiteiliges Drahtspeichenrad zur schlauchlosen Verwendung an Kraftfahrzeugen bekannt. Dabei besteht die Felgenschüssel aus drei Teilen, nämlich einem Profilring, einer rechten und einer linken Felgenschüssel. Auch dieses Drahtspeichenrad lässt sich in der Art eines Baukastensystems zusammenfügen.

Um in einem möglichst frühen Entwicklungsstadium bereits aerodynamische Eigenschaften neuer Felgen testen zu können, beispielsweise in einem Windkanal, ist es wünschenswert, bereits in diesem frühen Stadium ein Modell der späteren Felge zur Verfügung stellen zu können. Derartige Felgenmodelle werden beispielsweise aus vollen Aluminiumprofilen gefräst oder mittels Rapid-Prototyping-Verfahren hergestellt.

Insbesondere ein Fräsvorgang erfordert dabei einen erheblichen Aufwand, so dass geringfügige designerische Entwicklungsschritte nicht unmittelbar in einem neuen Felgenmodell realisiert werden, um die dadurch entstehenden hohen Modellkosten geringer zu halten. Auch die Anwendung des sogenannten Rapid-Prototyping-Verfahrens, kurz RP-Verfahren, ist relativ aufwändig und macht daher die Felgenmodelle teuer.

Die vorliegende Erfindung beschäftigt sich mit dem Problem, ein Felgenmodell bereitzustellen, das einfach und kostengünstig hinsichtlich seines Designs veränderbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, ein Felgenmodell bereitzustellen, welches ein Felgenbett, einen Felgenstern sowie Klemmprofile aufweist. Der Felgenstern umfasst dabei einen Nabe sowie zumindest drei Speichen, wobei zwischen einem radial äußeren Ende jeder Speiche und dem Felgenbett ein zugehöriges Klemmprofil eingeklemmt ist. Hierdurch wird demnach ein Felgenmodell geschaffen, welches einfach und kostengünstig nach dem Baukastenprinzip zusammenbaubar ist und dadurch einfach, schnell und kostengünstig an unterschiedliche Entwicklungsschritte anpassbar ist. Ein aufwändiges und teueres Herstellen von beispielsweise aus Aluminium gefrästen Felgenmodellen kann dadurch entfallen, wodurch sich die Forschungs- und Entwicklungskosten deutlich reduzieren lassen.

Zweckmäßig weist zumindest eine Speiche ein der Nabe zugewandtes Außengewinde auf, welches in ein an der Nabe angeordnetes Innengewinde einschraubbar ist. Hierdurch lässt sich in besonders einfacher Weise ein Durchmesser der Felge variieren, so dass mit ein und denselben Speichen unterschiedliche Felgendurchmesser erzeugbar sind.

Bei einer vorteilhaften Ausführungsform der erfindungsgemäßen Lösung ist zwischen zwei Felgenkränzen zumindest ein die Breite der Felge beeinflussendes Ringelement eingebaut. Ein derartiges Ringelement kann in nahezu beliebiger Breite hergestellt werden, wodurch sich beispielsweise für Felgen mit unterschiedlicher Breite aber gleichem Design einfach einzubauende Ringelemente vorsehen lassen, mit Hilfe welcher die aerodynamischen Eigenschaften der Felge bei unterschiedlicher Felgenbreite kostengünstig getestet werden können, ohne dass hierfür stets neue Felgenmodelle hergestellt werden müssen. Neues Felgendesign wird durch Aufsetzen einer "Radkappe" (Gfk, RP o.ä.) dargestellt.

Zweckmäßig ist an zumindest einem Felgenkranz des Felgenbettes eine Nut vorgesehen, in welche eine komplementär dazu ausgebildete Feder des Klemmelements eingreift. Eine derartige Nut erlaubt im Vergleich zu umfangsmäßig begrenzten Vertiefungen eine beliebige Anordnung der Speichen bzw. der zwischen den Speichen und dem Felgenkranz vorgesehen Klemmelementen, wodurch die Konstruktion bzw. das Herstellen des Felgenmodells vereinfacht werden. Gleichzeitig bietet eine derartige Nut eine Kraft und formschlüssige und damit zuverlässige Verbindung zwischen dem Klemmelement und dem Felgenkranz, wodurch eine hohe Qualität des Felgenmodells erreicht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
Fig. 1 eine Explosionsdarstellung eines erfindungsgemäßen Felgenmodells,
Fig. 2 einen Querschnitt durch eine obere Hälfte des Felgenmodells,
Fig. 3 ein montiertes Felgenmodell mit einer möglichen Zierblende.

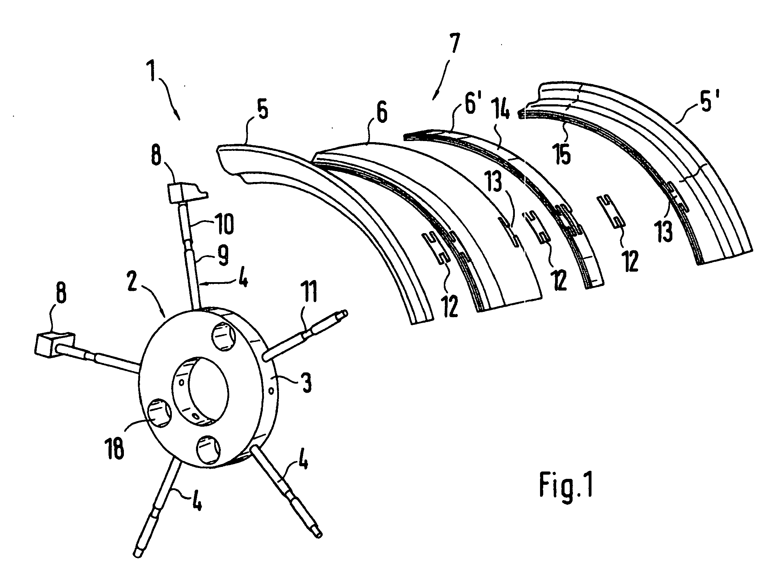

Entsprechend Fig. 1 weist ein erfindungsgemäßes Felgenmodell 1 einen Felgenstern 2 mit einer Nabe 3 und insgesamt fünf Speichen 4 auf sowie ein aus zwei Felgenkränzen 5 und 5' und zwei Ringelementen 6 und 6' gebildetes Felgenbett 7. Desweiteren weist das Felgenmodell 1 Klemmelemente 8 auf, welche jeweils an einem radial äußeren Ende der Speichen 4 angeordnet sind und bei komplett montierter Felge zwischen der Speiche 4 und dem Felgenkranz 5 eingeklemmt werden. In Fig. 1 sind lediglich zwei Klemmelemente 8 dargestellt, wobei die Anzahl der Klemmelemente 8 der Anzahl der Speichen 4 entspricht. Eine Verbindung bzw. Abstützung der jeweiligen Speiche 4 am zugehörigen Klemmelement 8 erfolgt dabei über ein Gleitlager, wodurch ein Verdrehen der Speiche 4 um ihre Längsachse ermöglicht wird.

Mit dem erfindungsgemäßen Felgenmodell 1 lassen sich auf konstruktiv einfache Weise unterschiedlichste Arten, beispielsweise hinsichtlich der Breite, von Felgen herstellen, welche anschließend beispielsweise zu Versuchszwecken in Windkanälen, eingesetzt werden können. Wie weiter aus Fig. 1 zu entnehmen ist, sind die Speichen 4 sternförmig von außen an der Nabe 3 angeordnet, wobei die Speichen 4 jeweils ein nicht gezeigtes und der Nabe 3 zugewandten Außengewinde aufweisen, welches in ein ebenfalls nicht gezeigtes an der Nabe 3 angeordnetes Innengewinde eingreift, so dass die Speiche 4 in die Nabe 3 eingeschraubt werden kann. Zusätzlich kann vorgesehen sein, dass die Speichen 4 bzw. zumindest eine der Speichen 4, zwei Speichenabschnitte 9 und 10 aufweisen, wobei der eine Speichenabschnitt 9 ein Außengewinde und der anderen Speichenabschnitt 10 ein zugehöriges Innengewinde besitzt. Selbstverständlich ist auch vorstellbar, dass wie in Fig. 1 gezeigt, ein Abschnitt 11 als stabförmiges Außengewinde ausgebildet ist und in die beiden dann jeweils mit einem Innengewinde versehenen Speichenabschnitte 9, 10 einschraubbar ist. Durch die beiden Speichenabschnitte 9, 10 bzw. den Abschnitt 11 kann eine Längserstreckung der Speiche 4 in Verbindung mit neuen Felgenkränzen analogen Durchmessers variiert werden, so dass unterschiedliche Felgendurchmesser realisiert werden können.

Zum Herstellen von Felgenmodellen 1 mit unterschiedlicher Breite können unterschiedlich breite Felgenkränze 5, 5' oder aber zusätzlich oben erwähnte Ringelemente 6, 6' zwischen den Felgenkränzen 5, 5' angeordnet werden. Eine Verbindung zwischen dem jeweiligen Felgenkranz 5 und dem Ringelement 6 bzw. zwischen Felgenkränzen 5, 5' und den Ringelementen 6, 6' erfolgt dabei über Verbindungselemente 12, welche gemäß Fig. 1 eine H-Form aufweisen. Dabei sind an jedem Felgenkranz 5, 5' bzw. an jedem Ringelement 6, 6' Vertiefungen 13 vorgesehen, welche sich bei miteinander verbundenen Felgenkränzen 5, 5' oder bei miteinander verbundenem Ringelement 6 und Felgenkranz 5 gegenüberliegen und in welchen in verbundenem Zustand das Verbindungselement 12 eingreift. Vorzugsweise sind dabei die Vertiefungen 13 komplementär zu den Verbindungselementen 12 ausgebildet, so dass die in Fig. 1 gezeigten Vertiefungen 13 eine T-Form aufweisen, in welche im verbundenen Zustand jeweils eine Hälfte des H-förmigen Verbindungselementes 12 eingreift. Darüber hinaus können am Felgenkranz 5 bzw. 5' sowie an den Ringelementen 6, 6' axial endseitig Nuten 13 bzw. komplementär dazu ausgebildete Federn 14 ausgebildet sein, welche ein passgenaues Ineinandergreifen der Felgenkränze 5, 5' und der Ringelemente 6, 6' in montiertem Zustand ermöglichen. Unterschiedliche Einpresstiefen durch unterschiedliche Naben, oder Adapterscheiben möglich.

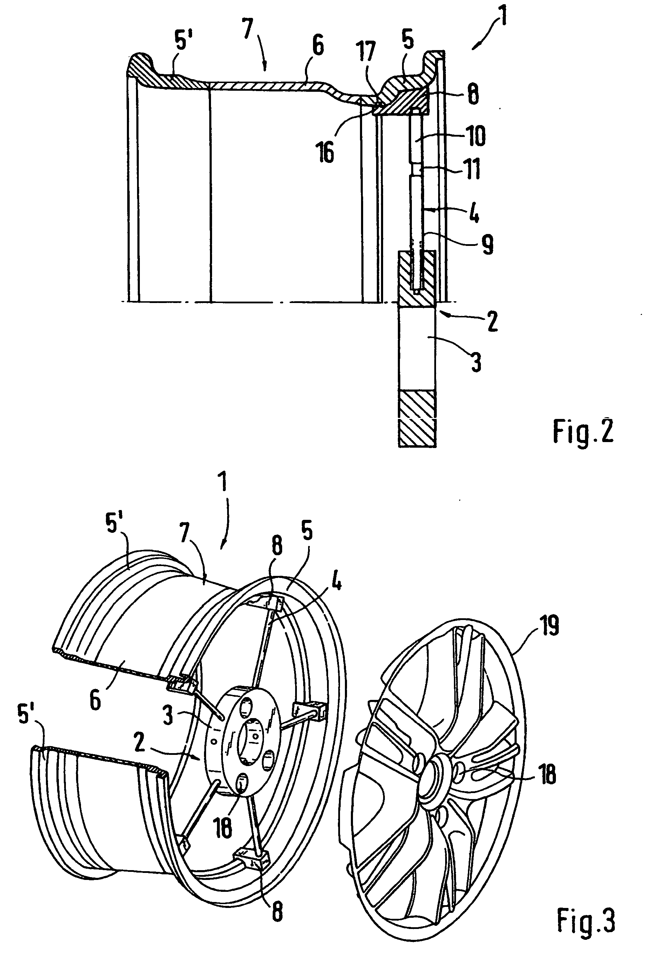

Wie in Fig. 2 gezeigt, weist das Klemmelement 8 eine zu einer ihm zugewandten Oberfläche des Felgenkranzes 5 komplementär ausgebildete Oberfläche auf, so dass das Klemmeelement 8 flächig am Felgenkranz 5 anliegt. Ebenfalls in Fig. 2 gezeigt ist, dass die Speiche 4 in ihrem der Nabe 3 zugewandten Bereich ein Außengewinde aufweist, welches in ein dazu komplementär ausgebildetes Innengewinde an der Nabe 3 eingreift. Das Klemmelement 8 weist gemäß Fig. 2 eine zu einer ihm zugewandten Oberfläche des Felgenkranzes 5 gerichtete Feder 16 auf, welche in eine komplementär dazu am Felgenkranz ausgebildete Nut 17 eingreift. Die Abstützung eines radial äußeren Endes des Speichenabschnitts 10 am Klemmelement 8 erfolgt dabei, wie eingangs erwähnt, über ein Gleitlager, so dass ein Verdrehen des Speichenabschnitts 10 um die Speichenachse problemlos möglich ist.

Für alle dargestellten Felgenmodelle 1 gilt, dass das Felgenmodell 1 eine unterschiedliche Anzahl an Felgenkränzen 5 bzw. dazwischen angeordneten Ringelementen 6 aufweisen kann, so dass auch ein Felgenmodell 1 mit lediglich einem Felgenkranz 5 von der Erfindung mit umfasst ist. Ebenso ist eine Anzahl der Speichen 4, welche in Fig. 1 und 3 jeweils fünf beträgt, lediglich rein exemplarisch zu verstehen, so dass die Erfindung Felgenmodelle 1 mit zumindest drei Speichen 4 umschließt.

Zur Befestigung des Felgenmodells 1 an einer nicht gezeigten Antriebsnabe, weist die Nabe 3 zumindest eine parallel zur Felgenachse verlaufende Durchgangsöffnung 18, hier drei Durchgangsöffnungen 18 auf, welche in montiertem Zustand von Befestigungsmittel, beispielsweise Schrauben, durchgriffen sind.

Wie in Fig. 3 gezeigt, ist das Felgenmodell 1 zur Aufnahme einer Radkappe bzw. einer Radzierblende 19 ausgebildet, so dass sich mit dem Felgenmodell 1 gleichzeitig unterschiedlichste Radkappen bzw. Radzierblenden 19 mit untersuchen lassen. Diese "Kappe" stellt das Felgendesign dar, welches aerodynamisch bewertet werden soll.

Die in den Fig. 1 bis 3 gezeigten Felgenmodelle 1 können prinzipiell aus einem Baukastensystem für Felgenmodelle 1 zusammengebaut werden, welches mehrere Ringelemente 6, zumindest eine Nabe 3, mehrere Felgenkränze 5, mehrere Speichen 4 und mehrere Klemmelemente 8 umfasst und dadurch eine individuelle Gestaltung der gewünschten Felgenmodelle 1 erlaubt.

## Patentansprüche

1. Felgenmodell (1), insbesondere für Versuchszwecke, umfassend zumindest
- ein Felgenbett (7),
- einen Felgenstern (2) mit einer Nabe (3) und zumindest drei Speichen (4),
- eine der Anzahl der Speichen (4) entsprechende Anzahl an Klemmelementen (8), welche zwischen dem Felgenbett (7) und jeweils einem radial äußeren Ende der Speiche (4) eingeklemmt sind, wobei jede Speiche (4) über ein Gleitlager am zugehörigen Klemmelement (8) abgestützt ist.

2. Felgenmodell nach Anspruch 1 oder 2, **dadurch gekennzeichnet, dass** zumindest eine Speiche (4) ein der Nabe (3) zugewandtes Außengewinde aufweist, welches in ein an der Nabe (3) angeordnetes Innengewinde eingreift.

3. Felgenmodell nach Anspruch 1 oder 2, **dadurch gekennzeichnet,**
- **dass** zumindest eine Speiche (4) zwei Speichenabschnitte (9, 10) aufweist,
- **dass** einer der Speichenabschnitte (9) ein Außengewinde und der andere Speichenabschnitt (10) ein zugehöriges Innengewinde aufweist.

4. Felgenmodell nach einem der vorhergehenden Ansprüche, **dadurch gekennzeichnet, dass** das Felgenbett (7) zumindest einen Felgenkranz (5) aufweist.

5. Felgenmodell nach Anspruch 4, **dadurch gekennzeichnet, dass** zwischen zwei Felgenkränzen (5, 5') zumindest ein die Breite der Felge beeinflussendes Ringelement (6) eingebaut ist.

6. Felgenmodell nach Anspruch 4 oder 5, **dadurch gekennzeichnet,**
- **dass** das Felgenbett (7) zumindest zwei Felgenkränze (5, 5') aufweist, welche über Verbindungselemente (12) miteinander verbunden sind,
- **dass** das Verbindungselement (12) eine H-Form aufweist.

7. Felgenmodell nach einem der Ansprüche 4 bis 6, **dadurch gekennzeichnet,**
- **dass** an jedem Felgenkranz (5)/Ringelement (6) Vertiefungen (13) vorgesehen sind, welche sich bei miteinander verbundenen Felgenkränzen (5) oder bei miteinander verbundenem Ringelement (6) und Felgenkranz (5) gegenüberliegen und in welche im verbundenen Zustand das Verbindungselementes (12) eingreift, und/oder
- **dass** die Vertiefungen (13) T-förmig ausgebildet sind, wobei in die T-förmigen Vertiefungen (13) in verbundenem Zustand jeweils eine Hälfte des H-förmigen Verbindungselementes (12) eingreift.

8. Felgenmodell nach einem der Ansprüche 1 bis 7, **dadurch gekennzeichnet, dass** an zumindest einem Felgenkranz (5) des Felgenbetts (7) eine Nut (17) vorgesehen ist, in welche eine komplementär dazu ausgebildete Feder (16) des Klemmelementes (8) eingreift.

9. Felgenmodell nach einem der Ansprüche 1 bis 8, **dadurch gekennzeichnet, dass** das Klemmelement (8) eine zu einer ihm zugewandten Oberfläche des Felgenkranzes (5) komplementär ausgebildete Oberfläche aufweist.

10. Felgenmodell nach einem der Ansprüche 1 bis 9, **dadurch gekennzeichnet, dass** die Nabe (3) zumindest eine parallel zur Felgenachse verlaufende Durchgangsöffnung (18) aufweist.

11. Baukastensystem zur Herstellung eines Felgenmodells (1) nach einem der Ansprüche 1 bis 10, umfassend zumindest
- mehrere Ringelemente (6),
- eine Nabe (3),
- mehrere Felgenkränze (5),
- mehrere Speichen (4),
- mehrere Klemmelemente (8).

## Claims

1. Wheel rim model (1), in particular for test purposes, comprising at least
- a rim base (7),
- a rim star (2) with a hub (3) and at least three spokes (4),
- a number of clamping elements (8) corresponding to the number of spokes (4), said clamping elements being clamped between the rim base (7) and in each case a radially outer end of the spoke (4), wherein each spoke (4) is supported on the associated clamping element (8) via a sliding bearing.

2. Wheel rim model according to Claim 1 or 2, **characterized in that** at least one spoke (4) has an external thread which faces the hub (3) and engages in an internal thread arranged on the hub (3).

3. Wheel rim model according to Claim 1 or 2, **characterized**
- **in that** at least one spoke (4) has two spoke sections (9, 10),
- **in that** one of the spoke sections (9) has an external thread and the other spoke section (10) has an associated internal thread.

4. Wheel rim model according to one of the preceding claims, **characterized in that** the rim base (7) has at least one rim collar (5).

5. Wheel rim model according to Claim 4, **characterized in that** at least one ring element (6) which influences the width of the rim is fitted between two rim collars (5, 5').

6. Wheel rim model according to Claim 4 or 5, **characterized**
- **in that** the rim base (7) has at least two rim collars (5, 5') which are connected to each other via connecting elements (12), and
- **in that** the connecting element (12) is in the shape of an H.

7. Wheel rim model according to one of Claims 4 to 6, **characterized**
- **in that** depressions (13) are provided on each rim collar (5)/ring element (6), said depressions, with the rim collars (5) interconnected or with the ring element (6) and rim collar (5) interconnected, lying opposite one another and in which the connecting element (12) engages in the connected state, and/or
- **in that** the depressions (13) are of T-shaped design, with in each case one half of the H-shaped connecting element (12) engaging in the T-shaped depressions (13) in the connected state.

8. Wheel rim model according to one of Claims 1 to 7, **characterized in that** at least one rim collar (5) of the rim base (7) is provided with a groove (17) in which a tongue (16), which is designed in a complementary manner thereto, of the clamping element (8) engages.

9. Wheel rim model according to one of Claims 1 to 8, **characterized in that** the clamping element (8) has a surface which is formed in a complementary manner with respect to a surface, facing the clamping element, of the rim collar (5).

10. Wheel rim model according to one of Claims 1 to 9, **characterized in that** the hub (3) has at least one passage opening (18) running parallel to the rim axis.

11. Construction kit system for producing a wheel rim model (1) according to one of Claims 1 to 10, comprising at least
- a plurality of ring elements (6),
- a hub (3),
- a plurality of rim collars (5),
- a plurality of spokes (4),
- a plurality of clamping elements (8).

## Revendications

1. Modèle de jante (1), en particulier à des fins de recherche, comprenant au moins :
- un fond de jante (7),
- une étoile de jante (2) avec un moyeu (3) et au moins trois rayons (4),
- une pluralité d'éléments de serrage (8) en nombre correspondant au nombre des rayons (4), qui sont serrés entre le fond de jante (7) et à chaque fois une extrémité radialement extérieure du rayon (4), chaque rayon (4) étant supporté par le biais d'un palier lisse sur l'élément de serrage associé (8).

2. Modèle de jante selon la revendication 1 ou 2, **caractérisé en ce qu'**au moins un rayon (4) présente un filetage extérieur faisant face au moyeu (3), qui vient en prise dans un filetage intérieur disposé sur le moyen (3).

3. Modèle de jante selon la revendication 1 ou 2, **caractérisé en ce :**
- **qu'**au moins un rayon (4) présente deux portions de rayon (9, 10),
- **qu'**une des portions de rayon (9) présente un filetage extérieur et l'autre portion de rayon (10) présente un filetage intérieur associé.

4. Modèle de jante selon l'une quelconque des revendications précédentes, **caractérisé en ce que** le fond de jante (7) présente au moins une couronne de jante (5).

5. Modèle de jante selon la revendication 4, **caractérisé en ce qu'**entre deux couronnes de jante (5, 5') est incorporé au moins un élément annulaire (6) influençant la largeur de la jante.

6. Modèle de jante selon la revendication 4 ou 5, **caractérisé en ce que**
- le fond de jante (7) présente au moins deux couronnes de jante (5, 5') qui sont assemblées l'une à l'autre par le biais d'éléments de connexion (12), et
- **en ce que** l'élément de connexion (12) présente une forme en H.

7. Modèle de jante selon l'une quelconque des revendications 4 à 6, **caractérisé en ce que**
- sur chaque couronne de jante (5) / élément annulaire (6) sont prévus des renfoncements (13) qui sont opposés l'un à l'autre lorsque les couronnes de jante (5) sont assemblées l'une à l'autre ou lorsque l'élément annulaire (6) et la couronne de jante (5) sont assemblés l'un à l'autre, et dans lesquels s'engage, dans l'état assemblé, l'élément de connexion (12),
et/ou
- **en ce que** les renfoncements (13) sont réalisés en forme de T, à chaque fois une moitié de l'élément de connexion (12) en forme de H venant en prise dans l'état assemblé dans les renfoncements en forme de T (13).

8. Modèle de jante selon l'une quelconque des revendications 1 à 7, **caractérisé en ce qu'**une rainure (17) est prévue sur au moins une couronne de jante (5) du fond de jante (7), dans laquelle vient en prise un ressort (16) de l'élément de serrage (8), réalisé de manière complémentaire à celle-ci.

9. Modèle de jante selon l'une quelconque des revendications 1 à 8, **caractérisé en ce que** l'élément de serrage (8) présente une surface réalisée de manière complémentaire à une surface de la couronne de jante (5) qui est tournée vers lui.

10. Modèle de jante selon l'une quelconque des revendications 1 à 9, **caractérisé en ce que** le moyeu (3) présente au moins une ouverture de passage (18) s'étendant parallèlement à l'axe de la jante.

11. Système de construction modulaire pour la fabrication d'un modèle de jante (1) selon l'une quelconque des revendications 1 à 10, comprenant au moins:
- plusieurs éléments annulaires (6),
- un moyeu (3),
- plusieurs couronnes de jante (5),
- plusieurs rayons (4),
- plusieurs éléments de serrage (8).
